# EUROPÄISCHE PATENTSCHRIFT

(11) **EP 1 441 137 B1**
(45) Veröffentlichungstag und Bekanntmachung des Hinweises auf die Patenterteilung: **23.08.2006**
(21) Anmeldenummer: 03027925.1
(22) Anmeldetag: 04.12.2003
(51) Int. Cl.: F16D 3/84

(54) **Abdichtanordnung für den Längenausgleich einer Kreuzgelenkwelle**
Seal assembly for the longitudinal adjustment of a Cardan joint
Ensemble d'étanchéité pour le réglage longitudinal d'un joint universel

(30) Priorität: 22.01.2003 DE 10302577
(43) Veröffentlichungstag der Anmeldung: 28.07.2004
(73) Patentinhaber: Spicer Gelenkwellenbau GmbH, 45143 Essen (DE)
(72) Erfinder: Schultze, Hans-Jürgen, 46240 Bottrop (DE); Meineke, Manfred, 58454 Witten (DE); Müller, Erhard, 45529 Hattingen (DE); Neises, Andreas, Dr.-Ing., 51469 Bergisch Gladbach (DE)
(74) Vertreter: Harwardt, Günther

(56) Entgegenhaltungen:
- EP-A- 0 440 518
- US-A- 2 116 290
- US-A- 3 016 722
- US-A- 3 633 383
- US-A- 3 942 336
- US-A- 5 230 658
- US-A- 5 702 306

## Beschreibung

Die Erfindung betrifft eine Abdichtanordnung für den Längenausgleich einer Kreuzgelenkwelle, welcher ein rohrförmiges erstes Wellenelement mit einer Innenverzahnung und ein zweites Wellenelement mit einer zur Innenverzahnung passenden und darin entlang einer Längsachse verstellbaren Außenverzahnung aufweist, wobei das erste Wellenelement eine kreiszylindrische Außenfläche aufweist, umfassend
- eine rohrförmige Dichthülse,
   - deren erstes Ende mit dem zweiten Wellenelement oder einem damit verbundenen Bauteil fest verbunden ist,
   - die koaxial mit radialem Spiel um zumindest einen Teil der Erstreckung der Außenfläche des ersten Wellenelementes entlang der Längsachse angeordnet ist und
   - die eine der Außenfläche zugewandte kreiszylindrische Hülseninnenfläche, eine Hülsenaußenfläche sowie ein zweites Ende aufweist,
- einen hülsenförmigen Dichtungsträger,
   - der von der Dichthülse getrennt ist.

In der US-A-36 33 383 ist eine Kreuzgelenkwelle beschrieben, welche ein über ein Anschlussrohr mit einer Gelenkgabel eines ersten Kreuzgelenkes verbundenes rohrförmiges erstes Wellenelement aufweist. Das erste Wellenelement weist in seiner Längsbohrung eine Innenverzahnung auf, deren Zähne parallel zu einer Längsachse verlaufen. Das erste Wellenelement besitzt ferner außen eine kreiszylindrische Außenfläche. In der mit der Innenverzahnung versehenen Längsbohrung des ersten Wellenelementes ist ein zweites Wellenelement mit einer Außenverzahnung entlang der Längsachse verstellbar aufgenommen. Das zweite Wellenelement ist mit einer Gelenkgabel eines zweiten Kreuzgelenkes verbunden. An einer zylindrischen Sitzfläche der Gelenkgabel des zweiten Kreuzgelenkes ist eine Dichthülse mit ihrem ersten Ende angeschweißt, die koaxial um das zweite Wellenelement angeordnet ist und an ihrem zweiten Ende einen Dichtungsträger trägt, der mit einem Halteabschnitt in die Dichthülse von deren zweiten Ende her eingesteckt und mit dieser verschweißt ist. Der Dichtungsträger bildet zwei Kammern, von denen die dem zweiten Kreuzgelenk entfernte Kammer nach außen in Richtung zum ersten Kreuzgelenk offen ist. In der durch eine Wand von dieser abgetrennten Kammer befindet sich ein Dichtring, der gegenüber der Außenfläche des ersten Wellenelementes abdichtet. Die zum ersten Kreuzgelenk hin offene Kammer weist einen Abstreifring auf, der eine nach außen vorragende Abstreiflippe besitzt, die dazu dient, Schmutz, der sich auf der Außenfläche abgesetzt hat, abzustreifen und damit den Dichtungsring zu schützen. Der Dichtungsträger ist wegen der Kammerausbildung nur spanend herstellbar.

Die US-A-3 942 336 beschreibt eine Abdichtanordnung für den Längenausgleich einer Kreuzgelenkwelle, welcher ein rohrförmiges erstes Wellenelement mit einer Innenverzahnung und ein zweites Wellenelement mit einer zur Innenverzahnung passenden und darin entlang einer Längsachse verstellbaren Außenverzahnung aufweist. Eines der beiden Wellenelemente weist eine kreiszylindrische Außenfläche auf. Es ist eine rohrförmige Dichthülse vorgesehen, deren erstes Ende mit dem zweiten Wellenelement durch eine Schweißnaht fest verbunden ist. Diese ist koaxial mit radialem Spiel um zumindest einen Teil der Erstreckung der Außenfläche des ersten Wellenelementes angeordnet. Sie weist eine der Außenfläche zugewandte kreiszylindrische Hülseninnenfläche, eine Hülsenaußenfläche sowie ein zweites Ende auf. Es ist ferner eine einstückig aus einem Plastikmaterial hergestellte Dichtung vorgesehen. Diese umfasst einen Flansch, eine äußere Dichtlippe, eine innere Dichtlippe, einen Lagerblock, von der Außenfläche vorstehende Zapfen und eine Schulter. Der Lagerblock dient zur Lagerung auf der Außenfläche des rohrförmigen ersten Wellenelementes. Die Dichtung, von der der Lagerblock einen Teil bildet, soll aus einem solchen Kunststoffmaterial hergestellt sein, das starr genug ist, um eine gute Lagerung der Hülse auf dem rohrförmigen ersten Wellenelement zu gewährleisten. Die Zapfen dienen dazu, die Dichtung durch Eingriff in Radialbohrungen der Dichthülse am zweiten Ende der Dichthülse festzulegen. Die Schulter kommt beim Einschieben gegen die Endfläche der Dichthülse am zweiten Ende zur Anlage.

In der US-A-2 116 290 ist ein Längenausgleich für eine Kreuzgelenkwelle beschrieben, welcher ein erstes Wellenelement und ein zweites Wellenelement umfasst. Es ist eine rohrförmige Dichthülse vorgesehen, die mit einem Wellenelement an einem Ende fest verbunden ist, und auf deren zweites Ende ein kappenförmiger Dichtungsträger aufgesetzt ist, der separate und durch Scheiben voneinander getrennte Dichtungsringe hält.

In der EP-A-0 440 518 ist eine Abdichtanordnung für den Längenausgleich an einer Kreuzgelenkwelle beschrieben, bei der ein rohrförmiges erstes Wellenelement mit einer Innenverzahnung versehen ist, in die ein zweites Wellenelement mit einer zur Innenverzahnung passenden und darin entlang einer Längsachse verstellbaren Außenverzahnung einsitzt. Auf das Ende des rohrförmigen ersten Wellenelementes ist eine Kappe aufgesteckt, welche eine Dichtung eingeklemmt hält. Die Dichtung dichtet gegenüber einem zylindrischen Wellenabschnitt des zweiten Wellenelementes ab.

Die US-A-5 230 658 beschreibt einen Längenausgleich für eine Kreuzgelenkwelle, welcher ein rohrförmiges erstes Wellenelement mit einer Innenverzahnung und ein zweites Wellenelement mit einer zur Innenverzahnung passenden und darin entlang einer Längsachse verstellbaren Außenverzahnung aufweist. An dem mit dem die Außenverzahnung aufweisenden zweiten Wellenelement verbundenen Gelenkbauteil der Kreuzgelenkwelle ist eine rohrförmige Dichthülse befestigt, welche zumindest teilweise die kreiszylindrische Außenfläche des rohrförmigen ersten Wellenelementes überdeckt. Dem in die Dichthülse eintauchenden Ende des ersten Wellenelementes ist ein Dichtring zugeordnet. Dieser sitzt in einer Ringnut in der Außenfläche des ersten Wellenelementes.

Die US-A-3 016 722 beschreibt einen Längenausgleich für eine Kreuzgelenkwelle mit einem rohrförmigen ersten Wellenelement mit einer Innenverzahnung, das zum freien Ende hin, von dem aus das zweite Wellenelement mit seiner Außenverzahnung in das erste Wellenelement eintaucht, keine Innenverzahnung aufweist. Das zweite Wellenelement weist im Anschluss zu seinem mit der Außenverzahnung versehenen Abschnitt, der in die Innenverzahnung eingreift, einen im Durchmesser reduzierten Bereich auf, auf dem eine aus einem synthetischen Gummi hergestellte hülsenförmige Dichtung sitzt, die über ihre Länge verteilt mit radial verlaufenden Dichtlippen versehen ist, welche gegen die unverzahnte Bohrungswand des ersten Wellenelementes zur Anlage kommen und eine Abdichtung bewirken.

Der Erfindung liegt die Aufgabe zugrunde, eine Abdichtanordnung für den Längenausgleich einer Kreuzgelenkwelle zu schaffen, die einfach herstellbar und montierbar ist.

Gelöst wird diese Aufgabe erfindungsgemäß dadurch
- dass dem Dichtungsträger ein Dichtabschnitt mit mindestens einer Dichtlippe zur Anlage an der Außenfläche angeformt ist und
   - dass der Dichtungsträger einen Halteabschnitt aufweist, welcher auf die Dichthülse vom zweiten Ende her aufgeschoben oder in die Dichthülse vom zweiten Ende eingeschoben und mit dieser fest verbunden ist,
   - dass der Dichtungsträger durch einen Abschnitt aus Dichtungsmaterial zur Dichthülse abgedichtet ist.

Von Vorteil bei dieser Ausbildung ist, dass der hülsenförmige Dichtungsträger mit dem Dichtabschnitt und den Dichtlippen separat herstellbar ist und mit diesen ein Bauteil bildet. Der Dichtabschnitt mit der Dichtlippe kann mit diesem Dichtungsträger durch Anvulkanisieren verbunden sein. Die Montage kann ebenfalls einfach durch Einstecken in die Dichthülse erfolgen. Es ist hierdurch möglich, nur die Dichthülse an die jeweilige Ausführungsform des Längenausgleichs anzupassen, d.h. abhängig von dem vorgesehenen Verschiebeweg, der vom Längenausgleich zu kompensieren ist, unterschiedlich lang zu gestalten. Ferner ist eine abgedichtete Verbindung erreicht. Eine über den vollen Umfang der Dichthülse und den Dichtungsträger verlaufende Schweißnaht, die zu Verzügen führen kann, ist entbehrlich. Der Dichtungsträger kann als Formteil, beispielsweise aus einem Blechmaterial spanlos hergestellt werden, d.h. es ist keine spanende Bearbeitung erforderlich. Solche Formteile weisen eine gute Maßhaltigkeit und damit gute Rundlaufeigenschaften auf. Dies wird noch dadurch unterstützt, dass keine umlaufenden Auftragsschweißnähte zur Verbindung erforderlich sind, welche Verzüge und Unwuchten erzeugen.

In Ausgestaltung der Erfindung ist vorgesehen, dass der Dichtabschnitt des Dichtungsträgers einen Dichtkragen aufweist, der den Abschnitt aus Dichtungsmaterial bildet und das zweite Ende der Dichthülse umgreift. Hierdurch kann darauf verzichtet werden, den Dichtungsträger voll umfänglich mit der Dichthülse durch eine Schweißnaht zu verbinden, um eine dichte Verbindung zu erzielen. Zur Verbindung können vereinfachte Maßnahmen vorgesehen werden. Die Abdichtung zwischen dem Dichtungsträger und der Dichthülse erfolgt durch den Dichtkragen.

Alternativ ist es möglich, dem Dichtabschnitt eine Anlageschulter zuzuordnen, die den Abschnitt aus Dichtungsmaterial bildet und gegen die Stirnfläche am zweiten Ende der Dichthülse dicht anliegt. Hiermit wird eine dichte Verbindung erzielt, so dass durch die Art der Verbindung derselben miteinander keine sonstige rundum dichte Verbindung zwischen der Dichthülse und dem Dichtungsträger vorgesehen sein muss.

Ferner ist es auch möglich, dass der Dichtungsträger an seinem Halteabschnitt eine Schicht aufweist, die den Abschnitt aus Dichtungsmaterial bildet und den Halteabschnitt des Dichtungsträgers zur Dichthülse abdichtet und diesen an der Dichthülse festsetzt. In diesem Fall ist gegebenenfalls überhaupt keine weitere Sicherung des Dichtungsträgers zur Dichthülse mehr erforderlich. Die Abdichtung und Axialsicherung werden durch das Dichtungsmaterial übernommen, wobei ein Presssitz zwischen dem Dichtungsträger bzw. dessen Halteabschnitt und der Dichthülse vorgesehen ist. Wenn es die Einbauverhältnisse erfordern, ist es auch möglich, dass der die mindestens eine Dichtlippe aufweisende Dichtabschnitt in einem gegenüber dem Halteabschnitt im Durchmesser vergrösserten Stufenabschnitt angeordnet ist.

Dabei kann auch gleichzeitig die Stufe genutzt werden, um den Weg des Einschiebens des Halteabschnittes in die Dichthülse zu begrenzen.

Zur axialen Verbindung ist es möglich, den Halteabschnitt mit der Dichthülse durch mindestens eine Einbuchtung zu verbinden. Alternativ kommen zusätzlich oder ausschließlich die Verbindung über einen Kleber zwischen dem Dichtungsträger und der Dichthülse in Betracht. Ferner ist es auch möglich, zur axialen Festlegung zusätzlich Schweißpunkte vorzusehen, welche keine schädlichen Wärmeeinflüsse auf den Dichtabschnitt erzeugen.

Bevorzugte Ausführungsbeispiele der Erfindung sind in der Zeichnung schematisch dargestellt.

Es zeigt
- Figur 1: eine Kreuzgelenkwelle mit einer erfindungsgemäßen Abdichtanordnung gemäß Figur 2,
- Figur 2: das Detail X aus Figur 1 im vergrößerten Maßstab mit einer ersten Ausführungsform der Dichtanordnung im Halblängsschnitt,
- Figur 3: eine alternative Ausführungsform zu der Dichtanordnung gemäß Figur 2 im vergrößerten Maßstab im Halblängsschnitt und
- Figur 4: eine weitere Ausführungsform der Dichtanordnung im Halblängsschnitt.

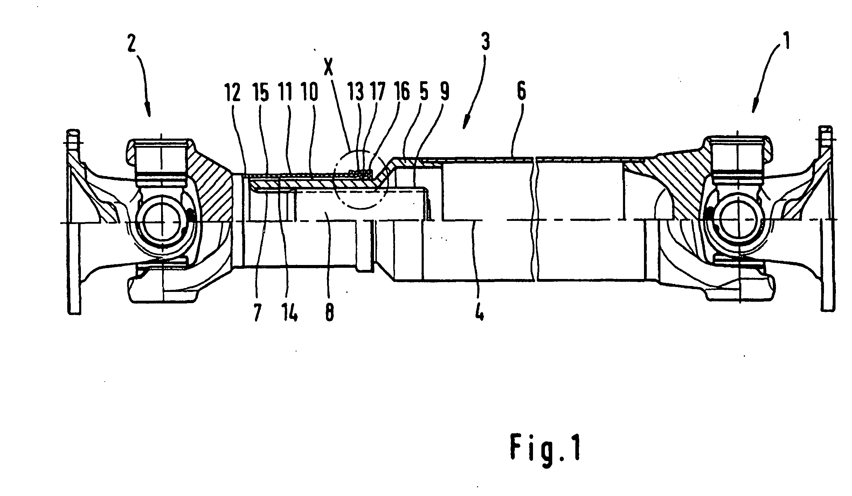

Die Kreuzgelenkwelle gemäß Figur 1 umfasst ein erstes Kreuzgelenk 1, welches eine erste Gelenkgabel mit einem Flansch zum Anschluss an ein treibendes oder getriebenes Bauteil, eine zweite Gelenkgabel und ein beide gelenkig verbindendes Zapfenkreuz aufweist. Das zweite Kreuzgelenk 2 ist ebenso aufgebaut wie das erste Kreuzgelenk 1. Ferner umfasst die Kreuzgelenkwelle einen Längenausgleich 3. Der Längenausgleich 3 weist einen auf einer Längsachse 4 ausgerichtetes rohrförmiges erstes Wellenelement 5 auf, das über ein Anschlussrohr 6 mit der zweiten Gelenkgabel des ersten Kreuzgelenkes 1 drehfest verbunden ist. Ferner weist das erste Wellenelement 5 eine Längsbohrung auf, in der eine Innenverzahnung 7 vorhanden ist, deren Zähne sich parallel zur Längsachse 4 in der Längsbohrung umfangsverteilt erstrecken.

Ferner ist ein mit der zweiten Gelenkgabel des zweiten Kreuzgelenkes 2 verbundenes zapfenförmiges zweites Wellenelement 8 vorgesehen, dass einen Abschnitt mit einer Außenverzahnung 9 aufweist. Die Außenverzahnung 9 ist zur Innenverzahnung 7 passend ausgebildet und greift mit ihren Zähnen zwischen die der Innenverzahnung 7 so ein, dass zwischen beiden ein Drehmoment übertragen werden kann und darüber hinaus beide zueinander relativ entlang der Längsachse 4 verstellbar sind. Zwischen dem mit der Außenverzahnung 9 versehenen Abschnitt des zweiten Wellenelementes 8 und dem Bereich, der mit der zweiten Gelenkgabel des zweiten Kreuzgelenkes 2 verbunden ist, befindet sich ein gegenüber der Außenverzahnung 9 im Durchmesser verringerter Abschnitt. Ferner weist das erste Wellenelement 5 eine kreiszylindrische Außenfläche 10 auf. Koaxial um das erste Wellenelement 5 und das zweite Wellenelement 8 ist eine Dichthülse 11 angeordnet, die mit ihrem ersten Ende 12 entweder unmittelbar mit dem zweiten Wellenelement 8 oder der zweiten Gelenkgabel des zweiten Kreuzgelenkes 2, an das das zweite Wellenelement 8 angeschlossen ist, verbunden ist. An das zweite Ende 13 der Dichthülse 11 ist ein Dichtungsträger 16 mit einem Dichtabschnitt 17 angeschlossen. Die Dichthülse 11 weist eine Hülseninnenfläche 14 auf, die zu der Außenfläche 10 mit radialem Abstand angeordnet ist. Sie besitzt ferner eine Hülsenaußenfläche 15. Die Dichthülse 11 kann je nach Erfordernis aus einem Metallrohr oder Kunststoffrohr bestehen.

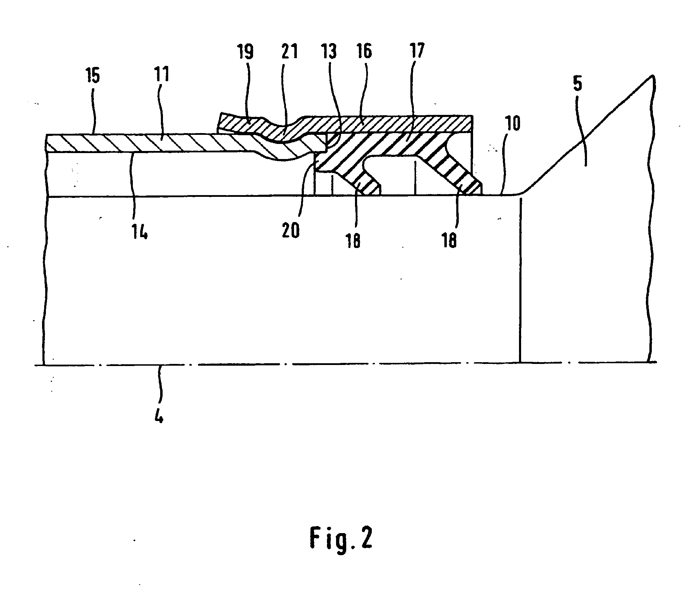

Der Aufbau und die Verbindung der Dichthülse 11 mit dem Dichtungsträger 16 und dem daran vorgesehenen Dichtabschnitt 17 ist in Form der Einzelheit X in den Figuren 2 bis 4 dargestellt und anhand derselben für verschiedene Ausführungsformen erläutert.

Die Figur 2 zeigt eine erste Ausführungsform, die auch Teil der Figur 1 ist. In Figur 2 sind die Dichthülse 11 mit ihrem zweiten Ende 13 und in Zuordnung zu dieser der Dichtungsträger 16 in Form eines Halblängsschnittes dargestellt. Es ist ferner die Längsachse 4 und die Außenfläche 10 des ersten Wellenelementes 5 erkennbar.

Der Dichtungsträger 16 ist in Form einer Hülse vorgesehen. Er besitzt innen einen aus einem Elastomer angeformten, insbesondere anvulkanisierten Dichtabschnitt 17 mit zwei entlang der Längsachse 4 voneinander beabstandeten und vom zweiten Ende 13 der Dichthülse 11 wegweisend auf die Außenfläche 10 zu verlaufenden Dichtlippen 18 sowie einem Dichtkragen 20. Der Dichtkragen 20 bildet zu der Innenfläche des hülsenförmigen Dichtungsträgers 16 eine Nut, in welche das zweite Ende 13 der Dichthülse 11 im montierten Zustand des Dichtungsträgers 16 mit seinem Halteabschnitt 19 auf der Hülsenaußenfläche 15 eingreift. Der Dichtkragen 20 übergreift also das zweite Ende 13 der Dichthülse 11. Die axiale Verbindung wird durch örtliche Verformungen in Form von radial nach innen gerichteten Einbuchtungen 21 im Halteabschnitt 19 des Dichtungsträgers 16 erzielt, wobei eine entsprechende Verformung bei der Montage auch im Bereich des Abschnittes der Dichthülse 11 zum zweiten Ende 13 hin erzielt wird. Damit wird der Dichtungsträger 16 an der Dichthülse 11 in axialer Richtung festgelegt.

Für die axiale Verbindung des Dichtungsträgers 16 mit der Dichthülse 11 sind nur lokale umfangsverteilte Einbuchtungen 21 erforderlich, weil die Abdichtung unmittelbar durch den Dichtabschnitt mit dem Dichtkragen 20 gegenüber der Dichthülse 11 vorgenommen wird. Zusätzlich kann zwischen der Innenfläche des Halteabschnitts 19 der Dichtungsträger 16 und der Hülsenaußenfläche 15 der Dichthülse 11 eine Beschichtung aus Dichtungsmaterial angeordnet sein.

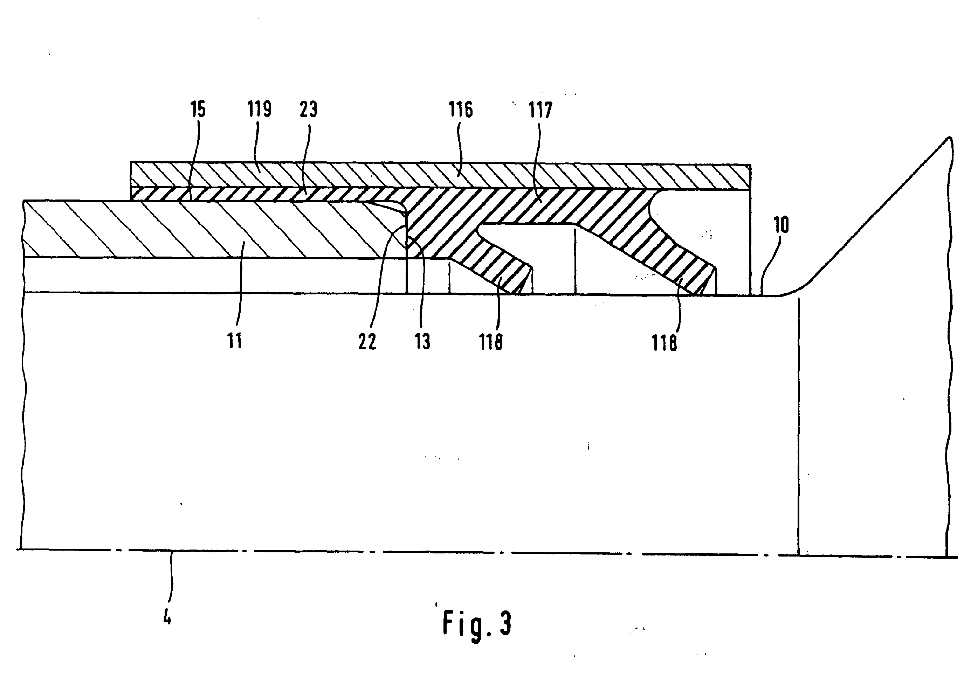

Figur 3 zeigt eine abgewandelte Ausführungsform. Teile, die denen bei der Ausführungsform gemäß Figur 2 entsprechen, sind mit Bezugszeichen versehen, die um den Zahlenwert 100 gegenüber denen der Ausführungsform gemäß Figur 2 erhöht sind. Zur Beschreibung derselben wird auf die zu den entsprechenden Teilen bei Figur 2 verwiesen.

Der Dichtungsträger 116 ist in Figur 3 ebenfalls in Zuordnung zu der Dichthülse 11 dargestellt. Der Dichtungsträger weist ebenfalls einen Dichtabschnitt 117 mit zwei vom zweiten Ende 13 der Dichthülse 11 weg auf die Außenfläche 10 vorstehende Dichtlippen 118 auf. Es handelt sich bei dem Dichtungsträger 116 mit dem Dichtabschnitt 117 und den zugehörigen Dichtlippen 118 um ein rotationssymmetrisches Bauteil bezüglich der Längsachse 4. Der Dichtabschnitt 117 bildet eine Anlageschulter 22, mit der er im montierten Zustand des Dichtungsträgers 116 auf der Hülsenaußenfläche gegen die Stirnfläche der Dichthülse 11 am zweiten Ende 13 dicht anliegt. montiert ist. Das Dichtungsmaterial des Dichtabschnittes 117 erstreckt sich auch über den Halteabschnitt 119 bzw. die Innenfläche des Dichtungsträgers 116 im Bereich des Halteabschnittes 119. Es ist hierdurch die Schicht 23 gebildet. Zum zweiten Ende 13 hin weist die Dichthülse 11 zu ihrer Außenfläche 15 hin eine abgeschrägte Fase auf, so dass der Dichtungsträger 160 mit seinem Halteabschnitt 119, der innen die Schicht 23 aufweist, leichter auf die Hülsenaußenfläche 15 axial entlang der Längsachse 4 aufgepresst werden kann. Die Schicht 23 bewirkt einerseits eine Abdichtung zwischen der Dichthülse 11 und dem Dichtungsträger 116 und zum anderen einen drehfesten Sitz des Dichtungsträgers 116 auf der Dichthülse 11. Die Anlageschulter 22 dient sowohl zur Unterstützung der Dichtwirkung zwischen dem Dichtungsträger 116 und der Dichthülse 11 als auch zur Begrenzung des Aufschiebeweges des Dichtungsträgers 116 auf die Dichthülse 11. Der Dichtungsträger 116 mit dem Dichtabschnitt 117 und den zugehörigen Dichtlippen 118 ist ebenfalls rotationssymmetrisch bezüglich der Längsachse 4 ausgebildet.

Die bei der Ausführungsform gemäß Figur 3 vorgesehene Schicht 23 aus Dichtungsmaterial kann auch bei der Ausführungsform gemäß Figur 2 zusätzlich zwischen dem Halteabschnitt 19 und der Außenfläche 15 der Dichthülse 11 vorgesehen sein.

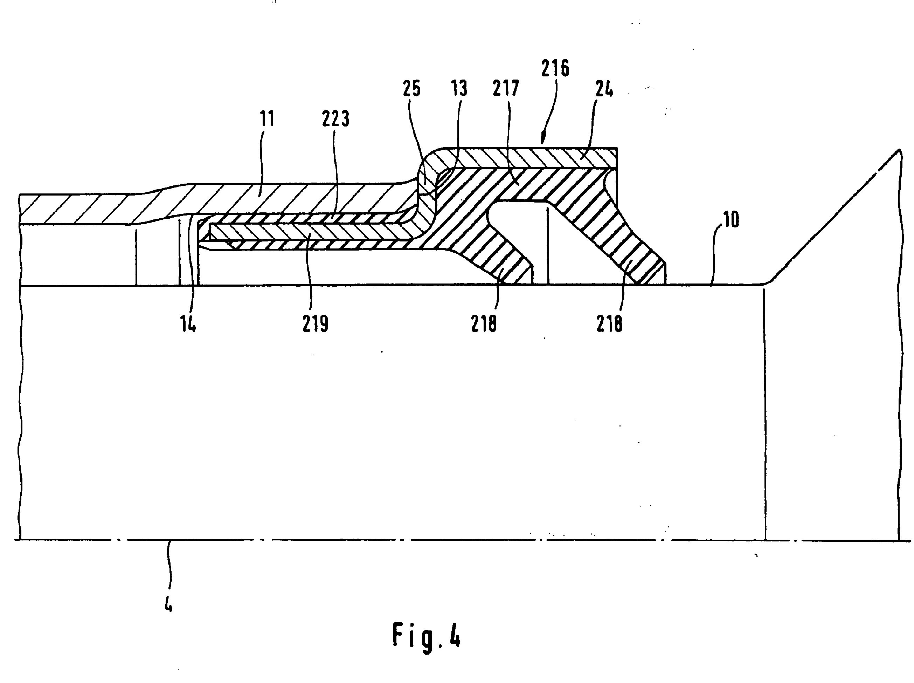

Bei der Ausführungsform gemäß Figur 4 sind für Bauteile bzw. Abschnitte, die mit denen der Ausführungsform gemäß Figur 2 vergleichbar sind, Bezugszeichen gewählt, die zu den entsprechenden Bezugszeichen der aus Figur 2 um den Zahlenwert 200 erhöht sind. Zu deren Beschreibung wird auf die Beschreibung zu Figur 2 verwiesen. Nachfolgend werden besonders die Unterschiede zu dieser Ausführungsform beschrieben.

In Figur 4 ist ein Halblängsschnitt einer weiteren Ausführungsform eines bezüglich der Längsachse 4 rotationssymmetrischen Dichtungsträgers 216 mit dem Dichtabschnitt 217 und den zugehörigen Dichtlippen 218 dargestellt. Der Dichtungsträger weist neben dem Halteabschnitt 209 einen dazu im Durchmesser vergrößerten Stufenabschnitt 24 auf, wodurch zwischen dem im Durchmesser kleineren Halteabschnitt 219 und dem Stufenabschnitt 24 ein Ringabschnitt 25 gebildet ist. Der Dichtabschnitt 217 mit den beiden Dichtlippen 218 befindet sich in dem im Durchmesser vergrösserten Stufenabschnitt 24. Das Dichtungsmaterial ist auch im Bereich des Halteabschnitts 219 vorgesehen, so dass dieser außen und innen mit dem Dichtungsmaterial beschichtet ist, aus dem der Dichtabschnitt 217 besteht. Der Dichtungsträger 216 ist mit dem im Durchmesser verringerten Hülsenabschnitt 219 und außen darauf befindlichen Schicht 223 in die Dichthülse 11 vom zweiten Ende 13 aus eingepresst, so dass über die Schicht 223 zu der Dichthülse 11 eine dichte und drehfeste Verbindung hergestellt wird. Über den Ringabschnitt 25 wird eine Einschubbegrenzung für den Dichtungsträger 216 in die Dichthülse 11 erreicht. Im voll eingeschobenen Zustand liegt der Ringabschnitt 25 gegen das zweite Ende 13 der Dichthülse 11 an.

Bei allen Ausführungsformen gemäß Figuren 2 bis 4 ist es möglich, zusätzlich eine Verklebung zwischen der Dichthülse 11 und dem zugehörigen Halteabschnitt 19, 119 bzw. 219 vorzusehen. Dies kann auch erfolgen, wenn eine Schicht aus Dichtungsmaterial vorgesehen ist.

### Bezugszeichenliste

- 1: erstes Kreuzgelenk
- 2: zweites Kreuzgelenk
- 3: Längenausgleich
- 4: Längsachse
- 5: erstes Wellenelement
- 6: Anschlussrohr
- 7: Innenverzahnung
- 8: zweites Wellenelement
- 9: Außenverzahnung
- 10: Außenfläche
- 11: Dichthülse
- 12: erstes Ende
- 13: zweites Ende
- 14: Hülseninnenfläche
- 15: Hülsenaußenfläche
- 16, 116, 216: Dichtungsträger
- 17, 117, 217: Dichtabschnitt
- 18, 118, 218: Dichtlippe
- 19, 119, 219: Halteabschnitt
- 20: Dichtkragen
- 21: Einbuchtung
- 22: Anlageschulter
- 23, 223: Schicht
- 24: Stufenabschnitt
- 25: Ringabschnitt

## Patentansprüche

1. Abdichtanordnung für den Längenausgleich (3) einer Kreuzgelenkwelle, welcher ein rohrförmiges erstes Wellenelement (5) mit einer Innenverzahnung (7) und ein zweites Wellenelement (8) mit einer zur Innenverzahnung (7) passenden und darin entlang einer Längsachse (4) verstellbaren Außenverzahnung (9) aufweist, wobei das erste Wellenelement (5) eine kreiszylindrische Außenfläche (10) aufweist, umfassend
- eine rohrförmige Dichthülse (11),
- deren erstes Ende (12) mit dem zweiten Wellenelement (8) oder einem damit verbundenen Bauteil fest verbunden ist,
- die koaxial mit radialem Spiel um zumindest einen Teil der Erstreckung der Außenfläche (10) des ersten Wellenelementes (5) entlang der Längsachse (4) angeordnet ist und
- die eine der Außenfläche (10) zugewandte kreiszylindrische Hülseninnenfläche (14), eine Hülsenaußenfläche (15) sowie ein zweites Ende (13) aufweist,
- einen hülsenförmigen Dichtungsträger (16, 116, 216),
- der von der Dichthülse (11) getrennt ist,
**dadurch gekennzeichnet,**
- **dass** dem Dichtungsträger (16, 116, 216) ein Dichtabschnitt (17, 117, 217) mit mindestens einer Dichtlippe (18, 118, 218) zur Anlage an der Außenfläche (10) und mit diesem ein Bauteil bildend angeformt ist und
- **dass** der Dichtungsträger (16, 116,216) einen Halteabschnitt (19, 119, 219) aufweist, welcher auf die Dichthülse (11) vom zweiten Ende (13) her aufgeschoben oder in die Dichthülse (11) vom zweiten Ende (13) eingeschoben und mit dieser fest verbunden ist,
- **dass** der Dichtungsträger (16, 116, 216) durch einen Abschnitt (20, 22, 23, 223) aus Dichtungsmaterial zur Dichthülse (11) abgedichtet ist.

2. Dichtungsanordnung nach Anspruch 1,
**dadurch gekennzeichnet,**
**dass** der Dichtabschnitt (17) dies Dichtungsträgers (16, 116) einen Dichtkragen (20) aufweist, der den Abschnitt aus Dichtungsmaterial bildet und das zweite Ende (13) der Dichthülse (11) umgreift.

3. Dichtungsanordnung nach Anspruch 1,
**dadurch gekennzeichnet,**
**dass** dem Dichtabschnitt (117) eine Anlageschulter (22) zugeordnet ist, die den Abschnitt aus Dichtungsmaterial bildet und gegen die Stirnfläche am zweiten Ende (13) der Dichthülse (11) dicht anliegt.

4. Dichtungsanordnung nach Anspruch 1,
**dadurch gekennzeichnet,**
**dass** der Dichtungsträger (116, 216) an seinem Halteabschnitt (119, 219) eine Schicht (23, 223) aufweist, die den Abschnitt aus Dichtungsmaterial bildet und den Halteabschnitt(119, 219) des Dichtungsträgers (116, 216) zur Dichthülse (11) abdichtet und diesen an der Dichthülse (11) festsetzt

5. Dichtungsanordnung nach Anspruch 4,
**dadurch gekennzeichnet,**
**dass** der die mindestens eine Dichtlippe (218) aufweisende Dichtabschnitt (217) in einem gegenüber dem Halteabschnitt (219) im Durchmesser vergrößerten Stufenabschnitt (24) angeordnet ist.

6. Dichtungsanordnung nach einem der Ansprüche 1 bis 5,
**dadurch gekennzeichnet,**
**dass** der Halteabschnitt (19) mit der Dichthülse (11) durch mindestens eine Einbuchtung (21)) verbunden ist.

7. Dichtungsanordnung nach einem der Ansprüche 1 bis 5,
**dadurch gekennzeichnet,**
**dass** der Dichtungsträger (16, 116, 216) ausschließlich oder zusätzlich über einen Kleber mit der Dichthülse (11) verbunden ist.

8. Dichtungsanordnung nach einem der Ansprüche 1 bis 5,
**dadurch gekennzeichnet,**
**dass** der Dichtungsträger (16, 116, 216) zusätzlich über Schweißpunkte mit der Dichthülse (11) verbunden ist.

## Claims

1. Sealing arrangement for the length compensation (3) of a universal joint shaft, which has a tubular first shaft element (5) with inner splines (7) and a second shaft element (8) with outer splines (9), fitting to the inner splines (7) and displaceable therein along a longitudinal axis (4), wherein the first shaft element (5) has a circular cylindrical outer face (10), comprising
- a tubular sealing sleeve (11),
- which first end (12) is fixed to the second shaft element (8) or to a component connected thereto,
- which is arranged with a radial play around at least a portion of the extension of the outer face (10) of the first shaft element (5) along the longitudinal axis (4), and
- having a circular cylindrical inner sleeve face (14), facing the outer face (10), an outer sleeve face (15) as well as a second end (13),
- a sleeve-like sealing carrier (16, 116, 216),
- which is separated from the sealing sleeve (11),
**characterised**
- **in that** a sealing portion (17, 117, 217) with at least one sealing lip (18, 118, 218) for abutment on the outer face (10) is formed on the sealing carrier (16, 116, 216) and forms with this one component, and
- **in that** the sealing carrier (16, 116, 216) has a holding portion (19, 119, 219), which is pushed onto the sealing sleeve (11) starting from the second end (13) or is inserted into the sealing sleeve (11) starting from the second end (13) and is non-rotationally connected thereto,
- **in that** the sealing carrier (16, 116, 216) is sealed in relation to the sealing sleeve (11) by a portion (20, 22, 23, 223) made of a sealing material.

2. Sealing arrangement according to claim 1,
**characterised in that**
the sealing portion (17) of the sealing carrier (16, 116) has a sealing collar (20), which forms the portion made from sealing material and encompasses the second end (13) of the sealing sleeve (11).

3. Sealing arrangement according to claim 1,
**characterised in that**
to the sealing portion (117) an abutment shoulder (22) is arranged, which forms the portions made from sealing material and abuts in a sealed manner the end face at the second end (13) of the sealing sleeve (11).

4. Sealing arrangement according to claim 1,
**characterised in that**
the sealing carrier (116, 216) has on its holding portion (119, 219) a layer (23, 223), which forms the portion made from sealing material and seals the holding portion (119, 219) of the sealing carrier (116, 216) in relation to the sealing sleeve (11) and which retains the holding portion (119, 219) on the sealing sleeve (11).

5. Sealing arrangement according to claim 4,
**characterised in that**
the sealing portion having the at least one sealing lip (218) is arranged in a step portion (24) increased in diameter compared to the holding portion (219).

6. Sealing arrangement according to one of claims 1 to 5,
**characterised in that**
the holding portion (19) is connected to the sealing sleeve (11) by means of at least one impression (21).

7. Sealing arrangement according to one of claims 1 to 5,
**characterised in that**
the sealing carrier (16, 116, 216) is solely or additionally connected by means of an adhesive to the sealing sleeve (11).

8. Sealing arrangement according to one of claims 1 to 5,
**characterised in that**
the sealing carrier (16, 116, 216) is connected additionally via welding points to the sealing sleeve (11).

## Revendications

1. Agencement d'étanchéité pour la compensation en longueur (3) d'un arbre de transmission à joint universel, comprenant un premier élément d'arbre tubulaire (5) pourvu d'une denture intérieure (7) et un second élément d'arbre (8) pourvu d'une denture extérieure (9) adaptée à la denture intérieure (7) et déplaçable dans celle-ci le long d'un axe longitudinal (4), le premier élément d'arbre (5) présentant une surface extérieure (10) cylindrique à base circulaire, comportant
- une douille d'étanchéité tubulaire (11),
- dont la première extrémité (12) est fermement reliée au second élément d'arbre (8) ou à un composant relié à celui-ci,
- qui est agencée coaxialement et avec jeu radial autour d'une partie au moins de l'extension de la surface extérieure (10) du premier élément d'arbre (5) le long de l'axe longitudinal (4), et
- qui comprend une surface intérieure de douille (14) cylindrique à base circulaire tournée vers la surface extérieure (10), une surface extérieure de douille (15) ainsi qu'une seconde extrémité (13),
- un support d'étanchéité en forme de douille (16, 116, 216),
- qui est séparé de la douille d'étanchéité (11),
**caractérisé en ce que**
- sur le support d'étanchéité (16, 116, 216) est conformée une portion d'étanchéité (17, 117, 217) avec au moins une lèvre d'étanchéité (18, 118, 218) destinée à venir en appui contre la surface extérieure (10), en formant un seul composant avec ledit support, et
- le support d'étanchéité (16, 116, 216) comprend une portion de maintien (19, 119, 219) qui est enfilée sur la douille d'étanchéité (11) depuis la seconde extrémité (13) ou qui est introduite dans la douille d'étanchéité (11) depuis la seconde extrémité (13) et est fermement reliée à celle-ci,
- le support d'étanchéité (16, 116, 216) est étanché par rapport à la douille d'étanchéité (11) par une portion (20, 22, 23, 223) en matériau d'étanchéité.

2. Agencement d'étanchéité selon la revendication 1,
**caractérisé en ce que**
la portion d'étanchéité (17) du support d'étanchéité (16, 116) comprend une collerette d'étanchéité (20) qui forme la portion en matériau d'étanchéité et qui entoure la seconde extrémité (13) de la douille d'étanchéité (11).

3. Agencement d'étanchéité selon la revendication 1,
**caractérisé en ce que**
à la portion d'étanchéité (117) est associé un épaulement d'appui (22) qui forme la portion en matériau d'étanchéité et qui s'appuie de façon étanche contre la surface frontale sur la seconde extrémité (13) de la douille d'étanchéité (11).

4. Agencement d'étanchéité selon la revendication 1,
**caractérisé en ce que**
le support d'étanchéité (116, 216) présente sur sa portion de maintien (119, 219) une couche (23, 223) qui forme la portion en matériau d'étanchéité et étanche la portion de maintien (119, 219) du support d'étanchéité (116, 216) par rapport à la douille d'étanchéité (11) et qui immobilise celui-ci sur la douille d'étanchéité (11).

5. Agencement d'étanchéité selon la revendication 4,
**caractérisé en ce que**
la portion d'étanchéité (217) présentant ladite au moins une lèvre d'étanchéité (218) est agencée dans une portion en gradin (24) présentant un diamètre agrandi par rapport celui de la portion de maintien (219).

6. Agencement d'étanchéité selon l'une des revendications 1 à 5,
**caractérisé en ce que**
la portion de maintien (19) est reliée à la douille d'étanchéité (11) par au moins un bombement (21).

7. Agencement d'étanchéité selon l'une des revendications 1 à 5,
**caractérisé en ce que**
le support d'étanchéité (16, 116, 216) est relié à la douille d'étanchéité (11) exclusivement ou en supplément par une colle.

8. Agencement d'étanchéité selon l'une des revendications 1 à 5,
**caractérisé en ce que**
le support d'étanchéité (16, 116, 216) est relié à la douille d'étanchéité (11) en supplément par des points de soudure.
